Europäisches Patentamt

European Patent Office

Office européen des brevets

(11) Publication number: **0 443 648 A1**

## EUROPEAN PATENT APPLICATION

(21) Application number: **91200209.4**

(22) Date of filing: **04.02.91**

(51) Int. Cl.⁵: **A23D 9/00**

(30) Priority: **19.02.90 EP 90200370**

(43) Date of publication of application:
**28.08.91 Bulletin 91/35**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **De Bruijne, Dirk Willem**
**Unilever Res. Lab., Olivier van Noortlaan 120**
**Vlaardingen(NL)**
Inventor: **Lucassen-Reynders, Emmie Helena**
**Unilever Res. Lab., Olivier van Noortlaan 120**
**Vlaardingen(NL)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Edible fat-containing composition.**

(57) The present invention is concerned with an edible composition containing from 10 to 100 wt.% fat essentially consisting of a mixture of polyol fatty acid polyester having a slip melting point of at least 25° C and digestible fat having a lower slip melting point, wherein the average molecular weight of the molecules comprised by the digestible fat is below 710.

We have found that the negative influence of the inclusion of relatively high melting polyol fatty acid polyester can be reduced substantially by using digestible fat composed of molecules having a low average molecular weight.

The present invention relates to an edible composition containing from 10 to 100 wt.% fat essentially consisting of a mixture of polyol fatty acid polyester having a slip melting point of at least 25°C and digestible fat having a lower slip melting point.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible compositions of the above mentioned type are known in the art and normally contain digestible fat in the form of triglycerides containing fatty acid residues of a carbon chain length in the range of 16-22. The quality of such edible compositions can be adversely affected by the presence of a relatively high amount of solidified polyol fatty acid polyester which does not dissolve into the lower melting digestible fat.

Depending on the type of edible composition, there normally is a temperature range in which the presence of such a substantial amount of solid polyol fatty acid polyester is clearly undesirable. For instance fat spreads and frying fat compositions containing a substantial amount of solid fat at a temperature of 35°C exhibit a rather bad mouthfeel. Furthermore, liquid oils, like salad oils, containing a significant amount of solid fat at ambient temperature tend to lose transparency due to the presence of fat crystals.

Since for various reasons it can be beneficial to include high melting polyol fatty acid polyester in edible compositions, it is desirable to find a way to overcome the negative effects of the inclusion of high melting polyol fatty acid polyester in edible compositions. We have found now that these negative effects can be reduced substantially by using digestible fat composed of molecules having a low average molecular weight, i.e. an average molecular weight well below the average molecular weight found in non-modified commercial triglyceride compositions of dairy, animal or vegetable origin.

Accordingly the present invention is concerned with an edible composition containing from 10 to 100 wt.% fat essentially consisting of a mixture of polyol fatty acid polyester having a slip melting point of at least 25°C and digestible fat having a lower slip melting point, wherein the average molecular weight of the molecules comprised by the digestible fat is below 710. Here by average molecular weight is meant the number weighted average molecular weight. According to a very preferred embodiment of the invention all the fat present in the edible composition essentially consists of a mixture of polyol fatty acid polyester having a slip melting point of at least 25°C and digestible fat having a lower slip melting point and an average molecular weight below 710.

Although the use of low melting digestible fat of an average molecular weight above 710 can help to reduce the negative influence of high melting polyol fatty acid polyester, inclusion of digestible fat of lower molecular weight is found to be more effective.

In this specification, unless indicated otherwise, the term 'fat' refers to edible fatty substances in a general sense, including natural or synthesized fats and oils consisting essentially of mono-, di- and/or triglycerides, which may have been partially or completely hydrogenated, interesterified, fractionated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification by indigestible is meant that at least about 70% by weight of the material concerned is not digested by the human body. The term digestible fat covers any fat which is not indigestible according to the above definition. Preferably at least 75% by weight of the digestible fat in the present edible composition is digested by the human body.

In this specification the term 'polyol' is intended to refer to any aliphatic or aromatic compound which comprises at least four free hydroxyl groups. Such polyols in particular include the group of sugar polyols, which comprises the sugars, i.e. the mono-, di-and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. If necessary, conventional techniques may be used to provide the required slip melting points. Suitably such techniques include full or partial hydrogenation, interesterification, transesterification and/or fractionation, and may be used before or after conversion of the polyols to polyol fatty acid polyesters. Suitable sources of the fatty acid residues are vegetable oils and fats, such as in particular partially or fully hydrogenated palm oils, palm kernel oils and soybean oils.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

According to a preferred embodiment of the invention, the fat mixture in the present edible composition consists of 10 to 90 wt.% polyol fatty acid polyester and 90 to 10 wt.% digestible fat. The benefits of the present invention are particularly appreciated in case the fat mixture contains a relatively large amount of polyol fatty acid polyester. Accordingly the fat mixture preferably contains 60 to 10 wt.% digestible fat and 90 to 40 wt.% polyol fatty acid polyester. Most preferably the fat mixture contains 50 to 15 wt.% digestible fat and 85 to 50 wt.% polyol fatty acid polyester.

As compared to the use of digestible fat of high molecular weight the use of digestible fat of low molecular weight is particularly beneficial if the polyol fatty acid polyester present in the edible composition is steep melting. Whether or not a fat is steep melting can be concluded from its solids profile, i.e. a graph in which the N-value at a temperature t ($N_t$) of the fat is set out against the temperature. Preferably the steepness (gradient) of the solids profile of the polyol fatty acid polyester, used in the present edible composition, exceeds 1.0%/$^\circ$C at a temperature in the range of 25$^\circ$ to 40$^\circ$C.

The $N_t$-value whenever referred to in this application, is measured by the nuclear magnetic relaxation technique and is a direct measure of the level of solid fat content at temperature t. An appropriate procedure is described in Fette, Seifen, Anstrichmittel 80(5), 180-186 (1978). To some extent N-values of fats and fatty substances are dependent on the temperature history in the preparation of the samples for the N-value measurement. For the purposes of the present invention a suitable preparatory temperature history comprises heating the sample to 80$^\circ$C, followed by 5 minutes at 60$^\circ$C and 60 minutes at 0$^\circ$C, whereafter the sample is held for 30 minutes at the temperature of the N-value measurement, subsequent to which said measurement is immediately carried out.

According to an even more preferred embodiment of the invention the steepness of the solids profile of the polyol fatty acid polyester exceeds 1.0%/$^\circ$C, preferably 1.5%/$^\circ$C at a temperature in the range of 30$^\circ$ to 35$^\circ$C. Most preferably the steepness exceeds 3.0%/$^\circ$C.

According to yet another preferred embodiment of the present invention the average molecular weight of the molecules comprised by the digestible fat is at least 300, more preferably, in the range of 390 to 710. We have found that in case the average molecular weight is below about 710, high melting polyol fatty acid polyester dissolves relatively easily into the digestible fat. In particular in case the average molecular weight of the digestible fat is below 660, high melting polyol fatty acid polyester will dissolve very effectively into said digestible fat.

The triglycerides present in the digestible contain at most a limited amount of fatty acid residues of a carbon chain length of 18 or more. Preferably the fatty acid composition of the latter triglycerides contains less than 40%, more preferably less than 30% of $C_{18}$ and longer fatty acids.

According to a preferred embodiment of the invention the digestible fat essentially consists of a fatty material selected from the group consisting of monoglycerides, diglycerides, triglycerides or mixtures thereof. Preferably the digestible fat contains from 80 to 100 wt.% triglycerides. Most preferably the digestible fat contains 90 to 100 wt.% triglycerides. Examples of digestible fat material which can suitably be employed in accordance with the present invention are: medium chain triglycerides (MCT's), butter olein, low melting fractions of lauric fats etc. Preferably from 50 to 100% of the fatty acid residues in the triglycerides have a carbon chain length in the range of 6-12. More preferably from 50 to 100% of the fatty acid residues have a carbon chain length in the range of 6-10.

The present invention encompasses edible compositions such as chocolate, spreads, ice cream, bakery margarine, shortenings, mayonnaise, dressings, cheese, frying fat etc. The benefits of the present invention are particularly pronounced in edible compositions containing a substantial amount of fat. Thus, in a preferred embodiment the edible composition contains from 35 to 100 wt.%, more preferably from 55 to 100 wt.% fat.

The adverse influence of the presence of relatively high melting polyol fatty acid polyester in edible compositions is particularly apparent in case such polyester has a melting point of at least 30$^\circ$C. Thus the advantageous effect of the use of low molecular weight digestible fat is most clearly observed for edible compositions wherein the polyol fatty acid polyester has a slip melting point of at least 30°C. Most preferably said polyol fatty acid polyester has an even higher slip melting point, i.e. a slip melting point of at least 35°C. The slip melting point of a fat can conveniently be defined as the temperature at which the amount of solid phase in a melting fat or fatty substance has become so low that an air bubble is forced upwards in an open capillary filled with the fat or fatty substance.

In edible compositions such as spreads, dressings, cheese, chocolate, ice cream etc. the mouthfeel of the product is largely determined by the amount of solid fat present in such products at mouth temperature, i.e. at about 35°C. Generally the solid fat content should be remain below 5% as otherwise a waxy mouthfeel will be observed. Thus, according to a preferred embodiment of the invention the mixture of polyol fatty acid polyester and digestible fat is composed in such a manner that the fat has an $N_{35}$-value of less than 5%, more preferably of even less than 3%.

The present invention is further illustrated by means of the following examples:

Example 1

A sucrose polyester (SPE) obtained through esterification (to a degree of more than 95%) of sucrose with fatty acids derived from a blend of fully hardened soybean oil having a slip melting point of 65°C (55%) and touch-hardened soybean oil having a slip melting point of 28°C (45%) was blended with a number of triglyceride oils in different weight ratios.

The triglyceride oils used were sunflower oil, medium chain triglyceride (MCT) oil, butter olein (obtained by dry fractionation of butter oil at 15°C) and butter oil. The average molecular weight of the sunflower oil was calculated as 890. The MCT oil was calculated to have an average molecular weight of 550. The butter oil and butter olein were found to have average molecular weights of 740 and 690 respectively. The N-values of the blends of sucrose polyester and triglyceride oil were measured at 30°, 35° and 40°C, using the method described earlier. The following results were obtained:

4

## Blend of 20 wt.% SPE and 80 wt.% triglyceride oil

| Triglyceride oil | $N_{30}$ | $N_{35}$ | $N_{40}$ |
|---|---|---|---|
| Sunflower oil | 3.2 | 2.1 | 0 |
| MCT oil | 2.7 | 0 | |
| Butter olein | 3.9 | 1.7 | 0 |
| Butter oil | # | 3.0 | 0 |

## Blend of 40 wt.% SPE and 60 wt.% triglyceride oil

| Triglyceride oil | $N_{30}$ | $N_{35}$ | $N_{40}$ |
|---|---|---|---|
| Sunflower oil | 9.0 | 5.2 | 1.3 |
| MCT oil | 6.4 | 4.3 | 0 |
| Butter olein | 9.6 | 4.6 | 0 |
| Butter oil | # | 6.7 | 3.2 |

## Blend of 60 wt.% SPE and 40 wt.% triglyceride oil

| Triglyceride oil | $N_{30}$ | $N_{35}$ | $N_{40}$ |
|---|---|---|---|
| Sunflower oil | 16.1 | 9.7 | 4.0 |
| MCT oil | 12.7 | 6.9 | 1.7 |
| Butter olein | 17.9 | 9.8 | 3.3 |
| Butter oil | # | 12.2 | 5.6 |

# at 30°C butter oil still comprises some solid fat contributing to the $N_{30}$ measured

The N-values of the SPE material at temperatures 30°, 35°, 40° and 45° C were found to be 48.0, 27.5, 11.0 and 0 respectively.

From the above results it can be concluded that the SPE material tends to dissolve into MCT oil and butter olein more readily than in sunflower oil and butter oil.

Example 2

Example 1 was repeated with the exception that a sucrose polyester used was obtained through esterification of sucrose, to a degree of more than 95%, with fatty acids derived from a blend of palm kernel oil fully hardened to a slip melting point of 39° C (62%) and palm oil fully hardened to a slip melting point of 58° C (38%).

Again the N-values at 30°, 35° and 40° C were measured, yielding the following data:

### Blend of 20 wt.% SPE and 80 wt.% triglyceride oil

| Triglyceride oil | $N_{30}$ | $N_{35}$ | $N_{40}$ |
|---|---|---|---|
| Sunflower oil | 1.5 | 0 | |
| MCT oil | 0 | | |
| Butter olein | 0.8 | 0 | |
| Butter oil | # | 0 | |

### Blend of 40 wt.% SPE and 60 wt.% triglyceride oil

| Triglyceride oil | $N_{30}$ | $N_{35}$ | $N_{40}$ |
|---|---|---|---|
| Sunflower oil | 10.9 | 0.8 | 0 |
| MCT oil | 4.6 | 0 | |
| Butter olein | 8.3 | 0.6 | 0 |
| Butter oil | # | 2.2 | 0 |

### Blend of 60 wt.% SPE and 40 wt.% triglyceride oil

| Triglyceride oil | $N_{30}$ | $N_{35}$ | $N_{40}$ |
|---|---|---|---|
| Sunflower oil | 23.6 | 7.9 | 0 |
| MCT oil | 16.6 | 1.9 | 0 |
| Butter olein | 23.8 | 7.2 | 0 |
| Butter oil | # | 8.9 | 0 |

# at 30°C butter oil still comprises some solid fat contributing to the $N_{30}$ measured

The N-values of the SPE material at temperatures 30°, 35°, 40° and 45°C were found to be 62.1, 34.6, 4.8 and 0 respectively.

Again the results indicate that the SPE material dissolves into MCT oil and butter olein more readily than in sunflower oil and butter oil.

## Claims

1. Edible composition containing from 10 to 100 wt.% fat essentially consisting of a mixture of polyol fatty acid polyester having a slip melting point of at least 25°C and digestible fat having a lower slip melting point, wherein the average molecular weight of the molecules comprised by the digestible fat is below 710.

2. Composition according to claim 1, wherein the fat mixture consists of 10 to 90 wt.% polyol fatty acid polyester and 90 to 10 wt.% digestible fat.

3. Composition according to claim 1 or 2, wherein the steepness of the solids profile of the polyol fatty acid polyester exceeds 1.0%/°C at a temperature in the range of 25° to 40°C.

4. Composition according to claim 3, wherein the steepness exceeds 1.0%/°C, preferably 1.5%/°C at a temperature in the range of 30° to 35°C.

5. Composition according to any one of claims 1-4, wherein the average molecular weight is in the range of 390 to 710.

6. Composition according to any one of claims 1-5, wherein the digestible fat contains from 80 to 100 wt.% triglycerides.

7. Composition according to claim 6, wherein from 50 to 100% of the fatty acid residues in the triglycerides have a carbon chain length in the range of 6-12.

8. Composition according to any one of claims 1-7, wherein the edible composition contains from 35 to 100 wt.%, preferably from 55 to 100 wt.% fat.

9. Composition according to any one of claims 1-8, wherein polyol fatty acid polyester has a slip melting point of at least 30°C, preferably of at least 35°C.

10. Composition according to any one of claims 1-9, wherein the fat has an $N_{35}$-value of less than 5%, preferably of less than 3%.

11. Composition according to any one of claims 1-10, wherein the digestible fat contains triglycerides and the fatty acid composition of the triglycerides contains less than 30% of $C_{18}$ and longer fatty acids.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 390 410 (THE PROCTER & GAMBLE CO.) * Claims 1,7,10 * | 1,2,5-8, 11 | A 23 D 9/00 |
| X | EP-A-0 350 986 (UNILEVER) * Claims 1-3,6,8; page 4, lines 39-42; page 5, lines 19-29; examples 1,3,5 * | 1-11 | |
| X | EP-A-0 350 983 (UNILEVER) * Claims 1,4; page 4, lines 1-4; page 5, lines 29-41; examples 1-12 * | 1,2,5-11 | |
| X | EP-A-0 350 988 (UNILEVER) * Claims 1,5,6; page 3, lines 41-44; examples 1-5 * | 1,2,5,8,9, 11 | |
| X | EP-A-0 287 157 (THE PROCTER & GAMBLE CO.) * Claims 1,8; page 5, lines 29-30 * | 1,2,5,8,11 | |

TECHNICAL FIELDS
SEARCHED (Int. Cl.5)

A 23 D

The present search report has been drawn up for all claims

| Place of search | Date of completion of search | Examiner |
|---|---|---|
| The Hague | 24 May 91 | DEKEIREL M.J. |